# FASCICULE DE BREVET EUROPEEN

(11) **EP 1 589 709 B1**
(45) Date de publication et mention de la délivrance du brevet: **14.05.2008**
(21) Numéro de dépôt: 05103025.2
(22) Date de dépôt: 15.04.2005
(51) Int. Cl.: H04L 12/56

(54) **Procédé de routage dans un réseau ad hoc**
Routingverfahren in einem Ad-Hoc Netzwerk
Method of routing in an ad hoc network

(30) Priorité: 20.04.2004 FR 0404143
(43) Date de publication de la demande: 26.10.2005
(73) Titulaire: Thales, 92526 Neuilly Sur Seine (FR)
(72) Inventeur: Delattre, Michel, 94117 CX Arcueil (FR); Paul, François, 94117 CX Arcueil (FR)
(74) Mandataire: Dudouit, Isabelle

(56) Documents cités:
- EP-A- 1 289 201
- EP-A- 1 376 939
- US-A1- 2003 202 476
- US-A1- 2003 204 616

## Description

L'invention concerne un procédé de routage dans un réseau ad hoc différenciant les applications critiques et optimisant les ressources selon la qualité de service attendue.

L'écoulement des flux multimédia à travers un réseau ad hoc de noeuds mobiles interconnectés par des moyens Radio conduit à sélectionner et à maintenir des routes compatibles avec une qualité de service de bout en bout malgré des variations de topologie faiblement prédictibles.

Les réseaux visés sont par exemple des réseaux à large étendue permettant d'amener les services voix et données sans avoir à s'appuyer sur une infrastructure rigide jusqu'au niveau capillaire. Les ressources nécessaires à l'écoulement de ces flux ainsi que des signalisations (gestion de ressources et de routage) doivent donc être minimisées et employées prioritairement pour les services opérationnellement importants comme les services phonie ou messagerie d'urgence.

L'art antérieur dans le domaine des routages réseaux ad-hoc et des extensions pour QoS traite les objectifs suivants :
- garantir la meilleure route, en terme de route la plus courte en nombre de sauts et minimiser les échanges de signalisation de routage. Ces méthodes ne sont toutefois pas suffisantes pour répondre aux besoins des communications multimédias. Il n'y pas de prise en compte de la qualité de service.
- découvrir des routes qui répondent à des critères de qualité de service QoS. Les méthodes associées ne permettent pas de traiter efficacement les demandes de route dans des réseaux étendus, car elles se contentent de proposer des mécanismes de traitement d'exception de la qualité de service QoS, d'où une perte de l'efficacité du protocole de routage de base.
- offrir un algorithme de routage tenant compte de la qualité de service QoS qui permette de maîtriser le volume de paquets de signalisation, même lorsque la taille du réseau s'accroît. Ces méthodes présentent comme défaut d'introduire un couplage étroit entre réservation de bande passante et routage, ce qui ne permet pas de traiter simplement l'ensemble des éléments de QoS dans un réseau Radio.
- La plupart de ces éléments, à savoir le taux d'erreur, le niveau de sécurité, le niveau d'énergie consommable, la gigue et le délai n'ont pas de relation avec une réservation de bande passante, ni avec la criticité des demandes d'urgence.
- tenir compte de la longévité des routes, de l'énergie consommée lors des relayages ou d'un autre critère. Ces méthodes présentent une optimisation selon une seule métrique, ce qui ne fournit pas une solution globale.
- partitionner un réseau en réseau de service virtuel ou VSN (an anglo-saxon Virtual service network) par caractéristique prédéterminée. Ces méthodes ne sont pas directement applicables à un réseau Radio ad hoc où les capacités des liens sont variables en fonction des aléas de propagation et de position des noeuds.
- modéliser le réseau ad-hoc en hyperlien et prendre en compte des états de noeuds mobiles. Ces méthodes ne sont pas directement applicables à un réseau à très large étendue privilégiant par des liens multipoints multiples par des techniques d'accès (ex :TDMA) ou d'antennes adaptatives.

La demande de brevet EP A 1 376 939 est une méthode de routage par des demandes de route depuis le noeud source jusqu'au noeud destinataire à travers les noeuds intermédiaires pour découvrir les routes possibles, et un classement ainsi qu'une pondération des critères de QoS pour sélectionner une route parmi les routes découvertes.

La demande de brevet EP A 1 289 201 décrit un procédé pour déterminer et initialiser une route entre une première station et une station destinataire dans un réseau ad-hoc. La première station transmet l'information correspondante aux stations adjacentes qui retransmettent l'information.

La demande de brevet US A 2003/0204616 décrit une méthode permettant de déterminer une route d'un noeud source vers un noeud destinataire dans un réseau ad-hoc. La méthode consiste à émettre une requête de route QoS pour déterminer le noeud destinataire dans un réseau ad-hoc. La méthode consiste à émettre une requête de route QoS pour déterminer le noeud destinataire basé sur cette qualité de service, la route contenant un identifcateur de flux et un lien métrique QoS. A chaque noeud intermédiaire, on détermine si le noeud intermédiaire peut supporter le paramètre requis de qualité de service, on met à jour le « métric » correspondant et on transmet la requête à l'un des noeuds intermédiaires et on réserve temporairement les ressources du noeud pour les requêtes. Au niveau du noeud destinataire, dès réception de la requête, on génère une réponse au noeud source comprenant un identificateur de flux et en mettant à jour le lien métric pour chaque route découverte.

En résumé, l'art antérieur décrit de nombreuses techniques qui tendent à supporter des communications multimédias dans des réseaux Radio à organisation ad-hoc, mais les multiples métriques à prendre en compte font que le problème à résoudre reste sans solution satisfaisante à la fois en termes de service rendu et en termes d'optimisation de moyens.

L'invention concerne un procédé de routage d'informations dans un réseau comprenant plusieurs noeuds de communication pouvant être mobiles, le routage étant effectué par une route entre un noeud source et un noeud de destination via un ensemble de liens de communication sans fil entre les noeuds du réseau, suivant la revendication 1.

Le procédé de routage selon l'invention offre notamment les avantages suivants :
o Il permet un routage différencié en tenant compte à la fois des performances pour la qualité de service QoS et des niveaux d'importance opérationnelle,
o Il segmente le réseau ad hoc en réseaux virtuels spécialisés à topologie hautement dynamique partageant une même connectivité Radio,
o Il optimise les ressources consommées et élimine au plus tôt les flux ayant des contraintes que le réseau de noeuds mobiles ne peut satisfaire,
o Il supporte une réservation de ressources qui s'adapte, non seulement à la demande, mais aussi aux variations de performances dues à la mobilité des noeuds et des aléas de propagation.
o la prédictibilité du service « trouver une route » est directement une fonction de l'importance opérationnelle de la demande :
   o les applications critiques sont donc mieux servies,
   o elles bénéficient de la mutualisation des demandes qui amortit les fluctuations de capacités dues aux transmissions Radio et à la mobilité ad-hoc.
o le niveau de ressources consommées par les signalisations de routage et de gestion de ressources pour assurer des qualités de service est adapté au plus juste selon l'importance opérationnelle des demandes :
   o l'efficacité globale du système est améliorée,
   o le niveau d'optimisation est paramétrable,
o les paramètres de qualité de service, primordiaux dans un système Radio multi-bonds, tels que les taux d'erreurs de bout en bout interviennent dans le choix des routes et l'application des réservations de ressources :
   o la méthode adoptée se différencie des méthodes habituelles de gestion de QoS par réservations de débit inadéquates pour tous les paramètres de QoS insensibles à ces niveaux de réservation,
   o les types de modulation Radio peuvent être sélectionnés dynamiquement par réseau virtuel pour une meilleure efficacité spectrale.

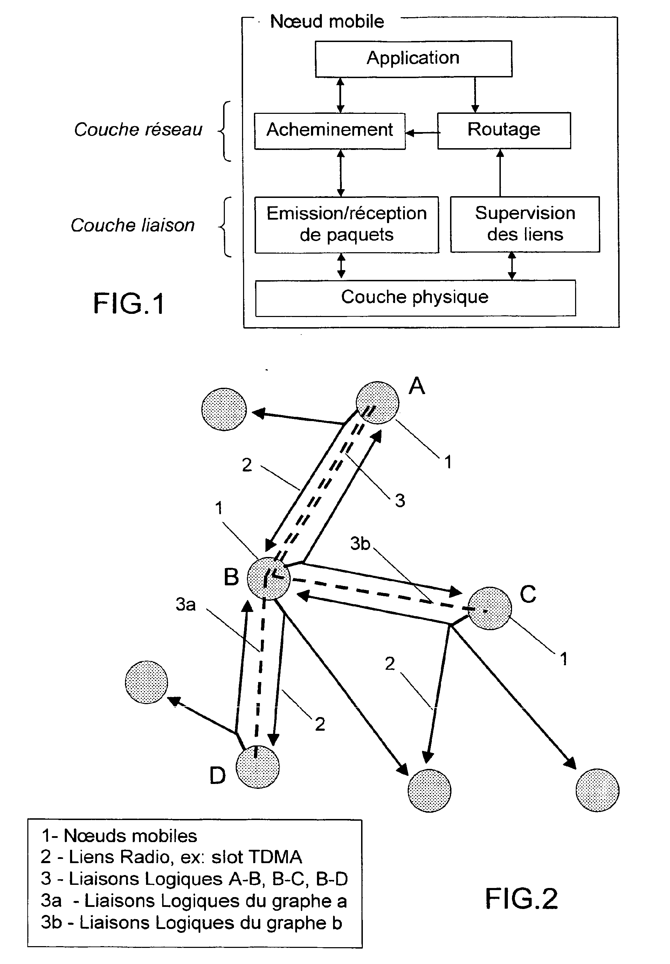

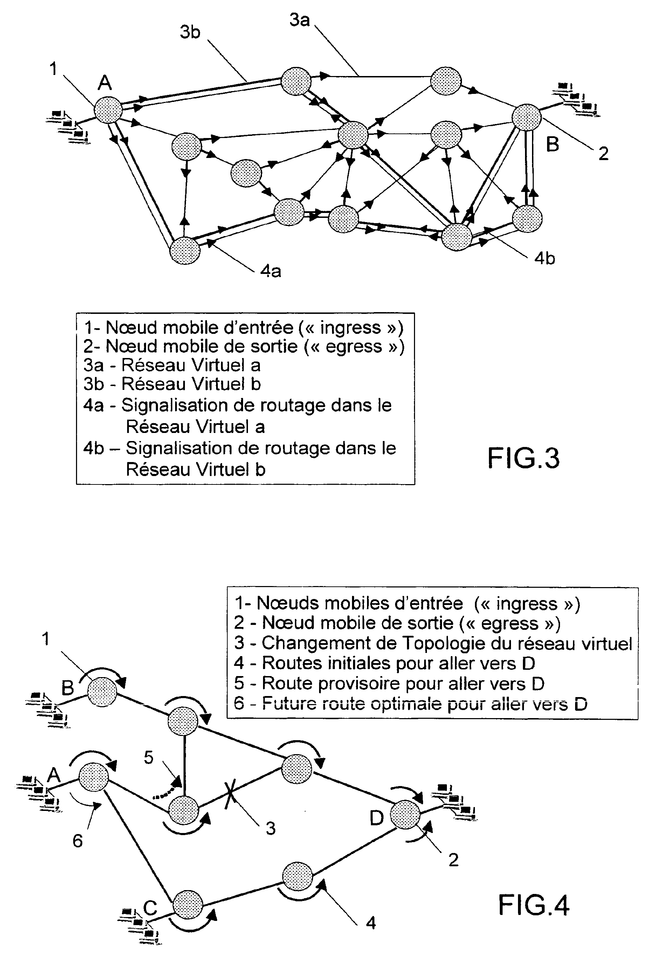

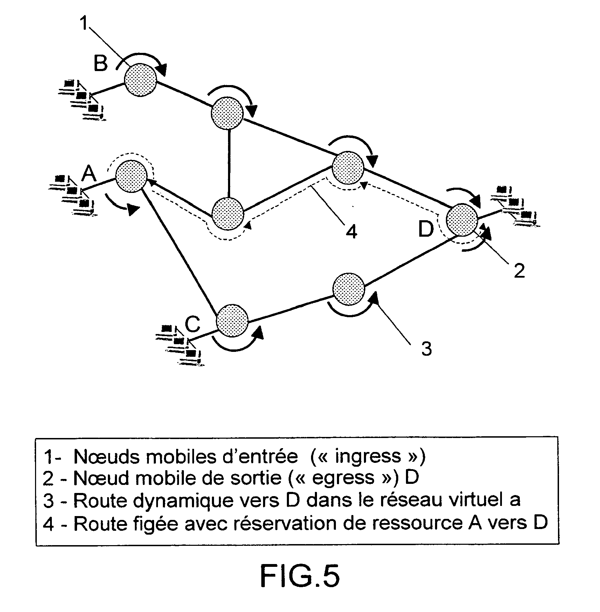

D'autres caractéristiques et avantages de l'invention apparaîtront mieux à la lecture de la description qui suit d'un exemple de réalisation donné à titre illustratif et nullement limitatif annexé des figures qui représentent :
o la figure 1 la composition d'un noeud mobile pour le procédé selon l'invention,
o La figure 2 un exemple de réseau et de graphe établi selon les étapes du procédé,
o La figure 3 un schéma représentant les réseaux virtuels ad hoc,
o La figure 4 un exemple de changement de topologie des réseaux virtuels ad-hoc,
o La figure 5 un exemple de graphe avec découplage entre réservation de ressources et routage dynamique dans un réseau virtuel.

Afin de mieux faire comprendre le principe mis en oeuvre dans le procédé selon l'invention l'exemple qui suit est donné à titre illustratif pour un réseau radio ad hoc comportant plusieurs noeuds mobiles interconnectés par des moyens radio point à multipoint. Le procédé vise notamment à établir une route entre un noeud source et un noeud de destination via un ensemble de liens de communication sans fil entre les noeuds du réseau.

Dans un réseau ad hoc, la topologie du réseau peut changer à tout moment, la dynamique étant imprévisible. Les caractéristiques d'un réseau ad hoc sont : une topologie dynamique, une bande passante limitée, des contraintes d'énergie, une sécurité physique limitée, une absence d'infrastructure.

Le procédé selon l'invention peut être mis en oeuvre sous la forme d'un programme d'ordinateur. Il peut se présenter sous la forme d'un hardware ou encore d'un logiciel. Les figures 2 à 5 représentent des diagrammes de flux de données échangées entre chaque noeud de réseau. Un noeud de réseau est un dispositif matériel piloté par des agents logiciels, présentant une autonomie de fonctionnement et collaborant avec les autres noeuds du réseau pour fournir des services de communications aux applications en périphérie de ce réseau. Les blocs représentés et les liens entre ces blocs peuvent être implémentés par des instructions logicielles. Ces instructions peuvent être exécutées par un processeur ou tout autre moyen équivalent.

La présente description fait l'hypothèse qu'un noeud mobile comprend typiquement les entités suivantes, décrites en relation avec la figure 1 :
- Une entité dite « applicative », qui dans la présente description représente toute entité susceptible de solliciter l'entité de routage pour qu'elle détermine une route appropriée à l'acheminement de données. Ces dernières données sont celles que l'entité applicative soumet par la suite à l'entité « d'acheminement », afin qu'elles soient véhiculées de noeud mobile en noeud mobile, jusqu'à l'entité applicative destinataire.
- Une entité de routage, chargée de déterminer les routes appropriées. Cette entité de routage utilise le procédé faisant l'objet de la présente invention. Les routes, une fois déterminées, sont communiquées à l'entité d'acheminement.
- Une entité d'acheminement. Quand une route appropriée a été déterminée par l'entité de routage, les paquets de données applicatifs sont acheminés de noeud mobile en noeud mobile par les entités d'acheminement, en suivant les routes.
- Une entité de supervision des liens. Sur un noeud mobile donné, l'entité de supervision des liens détermine quels sont les noeuds voisins, et les caractéristiques disponibles des ressources de communication permettant d'échanger des paquets avec les noeuds voisins.
- Une entité d'émission/réception de paquets qui permet d'échanger des paquets avec les noeuds voisins
- Une entité « physique » qui matérialise les moyens d'accès au support physique (typiquement, cette couche physique regroupe les mécanismes de modulation/démodulation, codage, synchronisation etc. pour l'accès à la voie radio).

Un exemple de réseau Radio ad-hoc est représenté à la figure 2. Il comprend par exemple un noeud source ou noeud d'entrée Ne, plusieurs noeuds intermédiaires Ni et un noeud de sortie Ns. Le réseau ad hoc peut être représenté comme un graphe Gt composé d'un ensemble de noeuds mobiles et de l'ensemble des connexions (liaisons radio dans ce cas) existant entre ces noeuds.

Les liens Radio peuvent être directifs soit par des techniques d'accès, telles que les techniques TDMA, soit par des techniques d'antennes sectorielles connues de l'Homme du métier. Le terme « directif » est employé pour désigner une mise en relation d'un nombre limité et maîtrisé de voisins au sens de la propagation Radio.

Chaque noeud comporte par exemple des moyens qui répertorient les ressources permettant d'atteindre les noeuds voisins. Pour chaque type de ressources (allocation TDMA, canal de propagation, etc.) sont associées certaines caractéristiques qui correspondent aux liaisons logiques. Les caractéristiques peuvent être demandées par exemple par une application.

Le procédé selon l'invention comporte une première étape qui structure le graphe du réseau en liaison bidirectionnelle point à point afin d'obtenir toutes ou sensiblement toutes les relations Ri,j existant entre 2 noeuds Ni, Nj et former, lors des décisions de routage, des sous-graphes dont les arcs reliant par exemple 2 noeuds partagent un même ou sensiblement un même ensemble de propriétés. Cette étape est exécutée pour un instant donné.
Elle peut être effectuée par exemple de la manière suivante :
- Dans chaque noeud mobile, l'entité « supervision des liens » émet périodiquement des paquets contenant entre autre :
   ■ L'identité du noeud émetteur N*ᵢ*,
   ■ La liste des liaisons {*Rᵢⱼ*} avec les noeuds voisins N*ⱼ*, avec leurs caractéristiques (caractère bidirectionnel, débit disponible, taux de perte de paquets ...)
- Chaque entité « supervision des liens » recevant les paquets décrits ci-dessus de la part des entités « supervision des liens » des noeuds voisins, elle en déduit l'ensemble des noeuds voisins, ainsi que les ressources disponibles permettant d'échanger des paquets avec eux.

Le graphe étant déterminé, le procédé continue à s'exécuter de la manière décrite ci-après.

Pour une application donnée qui doit connaître une route menant du noeud source vers le noeud de sortie, le noeud source émet une requête qui est diffusée aux autres noeuds les plus proches. Pour un mécanisme de routage de type « à la demande », lors de la phase de recherche d'une route, les requêtes de recherche de route ne sont propagées que sur les liens appartenant au sous-graphe respectant les propriétés demandées par l'application ayant sollicité le procédé de routage. La réponse du noeud final ou noeud de sortie permet de matérialiser la route à utiliser pour le transfert des informations dans le réseau. Un noeud mémorise par exemple une seule route qui correspond à celle ayant le plus petit nombre de sauts, parmi toutes les routes ayant les caractéristiques demandées.
Les caractéristiques des liaisons logiques établies par le procédé comprennent par exemple :
o Des niveaux de performances pouvant être pris en compte dans des métriques additives (délais, gigues, etc.) pour satisfaire une qualité de service QoS de bout en bout du réseau,
o Des niveaux de performances pouvant être pris en compte dans des métriques non additives (bande passante disponible, taux d'erreur maximal, etc),
o Des niveaux de risque en termes de sécurité,
o Des niveaux de longévité hérités de la mobilité des noeuds en relation et des caractéristiques Radio,
o Des niveaux énergétiques disponibles tel que coût administratif par classe de trafic permettant de structurer le réseau ad-hoc,
o Des niveaux compatibles avec les importances opérationnelles de communications.

Des regroupements typiques de combinaisons de valeurs de ces caractéristiques peuvent être définis préalablement à la mise en oeuvre du procédé. Un tel regroupement de combinaisons de valeurs possibles est appelé par la suite une « classe de trafic ».

Le procédé définit pour chaque grande classe de trafic à aiguiller à travers le réseau ad hoc des ensembles de liaisons logiques satisfaisant à un profil de fonctionnement. Une grande classe de trafic peut comporter une ou plusieurs des caractéristiques des liaisons logiques listées ci-dessus.

Si, pour un réseau donné à un instant donné, on ne considère que les liaisons satisfaisant les caractéristiques définies pour un certain ensemble de classes de trafic (un tel ensemble est appelé un « profil de fonctionnement »), on définit alors un sous-graphe spécialisé pour ce profil de fonctionnement. Ce sous-graphe est appelé réseau virtuel spécialisé.

La topologie de ces réseaux virtuels varie d'une part en fonction de la connectivité Radio variant avec la mobilité des noeuds et les aléas de propagation, d'autre part en fonction des valeurs de caractéristiques variant avec les charges de trafic écoulé.

Les calculs des valeurs de caractéristiques associées à des liaisons logiques font donc intervenir des marges. Ces dernières sont d'autant plus faibles que le niveau d'importance opérationnel servi est plus grand. Les marges sont fixées en tenant compte de la mobilité du réseau, cette dernière ne devant pas, pour une modification peu importante remettre en question le graphe déterminé. Les marges sont par exemple choisies pour anticiper la mobilité du réseau.

On remarque que même si le graphe Radio est connexe, il peut y avoir des réseaux virtuels décomposés en zones non connexes. En effet, pour deux noeuds donnés, il peut n'y avoir aucun chemin qui les relie tout en n'empruntant que des liaisons respectant un certain profil.

Le procédé permet avantageusement d'éliminer au plus tôt par échec de routage les paquets qui ne peuvent être acheminés de bout en bout selon des critères homogènes plutôt que de poursuivre leur acheminement dans le réseau ad hoc sans respecter les contraintes de flux auxquels ils appartiennent.

La figure 2 schématise le parcours des informations au sein d'un réseau virtuel distribué sélectionné par le premier noeud traversé du réseau ad hoc ou noeud d'entrée. Cette figure correspond à un exemple de fonctionnement dans lequel :
- L'entité applicative résidant dans le noeud 1 produit des paquets d'information à destination du noeud 2.
- L'entité applicative du noeud 1 indique à l'entité de routage qu'elle souhaite que les paquets sont destinés au noeud 2, et qu'ils doivent être transférés en respectant certaines caractéristiques de QoS.

Pour réaliser l'aiguillage des informations circulant dans le réseau et dans les noeuds intermédiaires en fonction du réseau virtuel sélectionné, une information caractérisant le flux est introduite dans l'entête des paquets par le noeud d'entrée Ne. Cette information matérialise par exemple la qualité de service telle qu'elle est exigée par l'entité applicative ayant produit le paquet.

Cette information est interprétée ou traduite par les noeuds intermédiaires les noeuds 1 et 2. L'information initiale ou traduite par les noeuds du routage est retirée par le noeud de sortie. Chaque noeud intermédiaire possède la règle prédéfinie lui permettant de déduire le réseau virtuel de l'information trouvée dans l'entête.

En résumé, le procédé exécute au moins les étapes suivantes :
a) insérer une information (par exemple les caractéristiques de qualité de service QoS demandée par l'application sollicitant le procédé de routage) au niveau de l'en-tête des paquets par le noeud source ou noeud d'entrée Ne,
b) interpréter ou traduire l'information par les noeuds intermédiaires afin de router le paquet d'informations circulant dans le réseau en respectant la contrainte du sous-graphe adapté à la demande de l'application,
c) au niveau du noeud de sortie Ns retirer l'information de l'en-tête.

La figure 3 représente un exemple de topologies variables de sous-graphes selon l'aptitude des liens du graphe complet du réseau ad hoc à écouler le trafic avec les niveaux de performance et d'importance opérationnelle associés au sous-graphe.

La connectivité d'un réseau virtuel ad hoc est plus restreinte que la connectivité Radio et varie en fonction des disponibilités des ressources. Selon les charges et les aléa de propagation, un lien Radio peut convenir à un réseau virtuel désigné « a » sur la figure mais pourra ne plus convenir à un réseau virtuel désigné « b » sur la figure.

Selon une variante de réalisation, le procédé comporte au niveau d'un noeud donné, une étape de comparaison entre les propriétés des ressources de communication existant entre ce noeud et les propriétés attendues des liaisons du sous-graphe considéré et la création ou la rupture des liaisons logiques selon que les propriétés constatées correspondent ou non à celles attendues. Lors de la comparaison des valeurs caractéristiques définissant les propriétés, une marge prédéfinie est appliquée. Pour une caractéristique donnée, la marge peut être différente d'un sous-graphe à l'autre.

L'instabilité supplémentaire introduite du fait de la rupture de liens est compensée par une structuration du trafic dans le réseau ad hoc amenant une meilleure occupation des ressources et donc une stabilité «long terme» nécessaire à l'écoulement de flux avec une qualité de service (respect de paramètres temporels, taux d'erreur et taux de perte).

Les liaisons logiques de différents réseaux virtuels partagent entre 2 noeuds adjacents les mêmes liens Radio.

Ce partage met en commun des ressources. Les politiques d'attribution de ces ressources vont introduire une interaction entre les liaisons logiques des différents réseaux virtuels.

En cas de congestion, l'ordonnancement des flux ou la réservation de ressources effectués à chaque noeud intermédiaire confirment ce choix par la mise en oeuvre de priorités d'acheminement paquet et des préemptions de ressources. Au niveau d'un noeud, si le procédé détecte la congestion, il met en oeuvre des politiques d'ordonnancement et de préemption qui définissent, en fonction des priorités d'acheminement de données demandées par les applications, les possibilités d'attribution des ressources pour servir un flux individuel au détriment d'un autre. Ces possibilités d'attribution peuvent éventuellement se faire au détriment d'un sous-graphe, en faveur d'un autre.

Les liaisons logiques de différents réseaux virtuels d'importance opérationnelle équivalente sont maintenues entre 2 noeuds adjacents tant que la disponibilité de ressources est compatible avec les performances de réseau virtuel. Les niveaux de ressources requis sont différents selon ces performances.

Ainsi une liaison logique d'un réseau virtuel associé à un service «best effort» sera conservée tant que la connectivité Radio est assurée alors qu'une liaison logique d'un Réseau virtuel dédié au service Temps réel ne sera conservée que si la connectivité Radio offre un débit disponible garantissant l'écoulement des flux Temps réel.

La figure 4 représente un schéma de graphe comprenant des routes figées et sélectionnées dans un sous graphe à un instant donné pour permettre d'en maîtriser les caractéristiques de qualité de service QoS de bout en bout et de leur associer des réservations de ressources.

La méthode permet par un mécanisme additionnel, lorsque les contraintes de flux à respecter de bout en bout l'exigent, de compléter la sélection d'une route par une réservation de ressources.

La réservation de ressources se fait le long d'une route active sélectionnée, dans un réseau virtuel « a » en figeant la route. Par la suite, le réseau virtuel « a » peut évoluer et le routage dynamique peut mettre en place d'autres routes optimales. La route figée n'est pas modifiée tant que les réservations de ressources faites pour elles sont conservées (elle est séparée des calculs de route ultérieurs).

Une réservation de ressources le long d'une route sélectionnée par un routage distribué dynamique utilisant des métriques orientées QoS introduit une forte instabilité. La réservation de ressources est effectuée, par exemple, bond par bond dans le réseau ad hoc de manière distribuée (les mécanismes centralisés ne sont pas applicables dans un réseau ad hoc) en suivant une route dans un des réseaux virtuels. L'approche en réseau virtuel permet d'effectuer ces réservations de préférence sur des réseaux virtuels caractérisés par leur stabilité.

A titre d'exemple, les paquets d'information acheminés faisant l'objet d'une réservation de ressources peuvent être des paquets IP, et le noeud d'entrée utilise une encapsulation IP dans IP pour désigner dans l'entête du paquet IP le noeud intermédiaire suivant. Les noeuds intermédiaires suivants peuvent interpréter ou traduire cette entête et désigner à leur tour le noeud suivant. Les paquets IP sont dé-encapsulés par le noeud de sortie de manière à retrouver dans l'entête IP l'adresse de destination finale.

D'autres techniques telles que l'encapsulation MPLS ou encapsulation spécifique à des couches d'accès Radio peuvent aussi être utilisées.

La méthode de routage s'appuie sur des disponibilités de ressources le long des liaisons logiques de réseau virtuel. La méthode avec réservation de ressources procède, dans le cas de congestion (disponibilité laissée insuffisante), à la libération de ressources réservées pour des flux d'importance opérationnelle moindre. Ces cas de congestion apparaissent soit au moment de la réservation du fait de réservations concurrentes, soit après la réservation lors d'une modification des caractéristiques des liens Radio (dues à la mobilité et les aléas de propagation).

Une réservation de ressources modifie la disponibilité des ressources sur un ensemble de liaisons logiques: toutes les liaisons partageant les mêmes liens Radio que les liaisons logiques du réseau virtuel où s'est effectuée la réservation.

La topologie des réseaux virtuels va donc se modifier en laissant inchangées les routes figées et orienter les nouvelles demandes d'écoulement de flux vers d'autres routes. Pour ramener le système à un état d'équilibre optimal lorsque les réservations sont libérées, un mécanisme supplémentaire permet par comparaison du nombre de bonds d'une route figée avec le nombre de bonds de la route dynamique de re-fixer les réservations sur la route la plus courte.

### Exemple d'application du procédé pour le routage utilisant le protocole AODV

L'exemple qui suit est donné pour l'application du procédé selon l'invention au protocole AODV qui est défini par le RFC 3561 de l'IETF. Ce protocole est réutilisé en lui adjoignant les fonctions nouvelles de la méthode de routage adoptée par un principe d'adressage particulier, une configuration des paramètres de routage particulière et des modifications dans la procédure d'inondations pour recherche de route et de réponses à ces demandes de recherche de route. Le procédé utilise par exemple le paramètre « adresse destinataire des PDU AODV pour véhiculer les caractéristiques de qualité de service.

Ces modifications sont faites de telle manière que les enrichissements ultérieurs du protocole AODV par les futures RFC de l'IETF (amendement pour traiter les chemins multiples ou les paramètres de QoS) puissent aussi bénéficier à la méthode de routage adopté.

### A - Utilisation des champs d'adresses de 4 octets des PDU AODV

Une adresse vue d'AODV sera de la forme IPv4 et constituée de la concaténation de 5 champs:

| Octet 1 (IPv4) | Octet 2 (IPv4) | | Octet 3 (IPv4) | | Octet 4 (IPv4) |
|---|---|---|---|---|---|
| Déploiement Multicast-Unicast | PRIO | COS | BW | Identifiant de noeud | |

Un champ «Déploiement et classe d'adresse» de 8 bits permet de constituer des adresses diffusion ou Broadcast, Multicast, et de faciliter les interopérabilités dans les cas d'entre aide.

Il sera codé à «10» pour les adresses unicast des micro-flux traversant le système Radio ad hoc et à «11» pour les adresses unicast utilisées pour les besoins internes du système Radio ad hoc (signalisation, gestion).

Un champ «PRIO» de 3 bits permet de différencier des importances opérationnelles. Ce dernier cas sera détaillé plus loin dans les mécanismes d'inondations et de réponses.

Un champ «CoS» de 4 bits permet de constituer 16 catégories de service du système Radio ad hoc. Ces classes de service «niveau 2» ne doivent pas être confondues avec les champs DiffServ des paquets IP transportés. Ils caractérisent 16 comportements HC qui ne sont pas forcément en bijection avec les classes DiffServ définies pour les paquets IP (IETF).

La correspondance est effectuée par les fonctions de périphérie selon des règles propres au type de fonction de convergence située en périphérie.

Un champ «BW» caractérise une classe de débit codé sur 2 bits. Un champ «MAC Radio ad hoc» sur 14 bits permet de désigner la station cible Radio. Ce format d'adresse est utilisé dans toutes les PDU AODV.

Une station cible est donc vue par plusieurs adresses. Ce principe simple permet de maintenir plusieurs routes selon des besoins de trafic distincts.

### B - Interface Topologie

La fonction de routage sur chaque noeud s'attend à recevoir la liste des voisins à 1 bond atteignable de la fonction Gestion de Topologie locale

Les procédures Hello de AODV ne seront donc pas activées.

Une fonction Gestion de la Disponibilité construit la liste des interfaces virtuelles utilisables. Ces interfaces virtuelles sont:
- soit des interfaces avec un lien point à point et dans ce cas la fonction Gestion de la Disponibilité fournit les attributs: identité de la station voisine, débit maximal utilisable et pour chaque catégorie de service la proportion de débit autorisée,
- soit des interfaces avec un lien point à multipoint et dans ce cas la fonction Gestion de la Disponibilité fournit la liste des stations voisines atteignables, ces interfaces ne seront pas utilisées pour le service de transfert de données point à point.

Le protocole AODV ne fait pas de base de routage politique. L'encapsulation va donc contraindre AODV à fonctionner sur des sous-graphes en filtrant les propagations de recherche de route.

Un sous-graphe est sélectionné en fonction des champs d'adresse «PRIO», «COS» et «BW». Cette sélection est faite par la fonction Gestion de la disponibilité qui intervient lors de la réception d'une recherche de route pour filtrer ou non selon l'appartenance de l'interface virtuelle au sous-graphe considéré.

### C - Inondations et Réponses

Les PDU AODV envoyés sur les interfaces logiques de routage sont encapsulées bond par bond par un protocole UDP où les adresses IP sont dans un plan d'adressage technique désignant implicitement les interfaces virtuelles.

Lorsque ces PDUs sont envoyées en broadcast dans le voisinage à un bond, l'adressage destinataire utilisé sera 255.255.255.255. Lorsque ces PDUs sont envoyés en unicast, l'adressage destinataire utilisé sera de la forme:

| Octet 1 (IPv4) | Octet 2 (IPv4) | | Octet 3 (IPv4) | | Octet 4 (IPv4) |
|---|---|---|---|---|---|
| Déploiement Multicast-Unicast | PRIO | INTF | | Identifiant de la station | |

Le champ INTF de 6 bits désigne l'interface virtuelle sortante. Les adresses source seront également de cette forme mais le champ INTF sera mis à la valeur nulle.

Les PDUs AODV peuvent contenir dans la partie donnée de la PDU des adresses d'origine de la requête et adresse du destinataire cible. Ces adresses contiennent comme indiquée précédemment au §A l'intégralité du champ FEC. A noter que l'adresse origine reprend les paramètres FEC de la cible de manière à avoir un sous-graphe parfaitement symétrique.
Pour introduire une notion de sous-graphe tout en gardant les avantages du broadcast à un bond, les messages propagés en broadcast limité à un bond (255.255.255.255) seront transmis en adjoignant à la PDU AODV initiale la liste des interfaces autorisées (désignées par l'identifiant de la station émetteur et le numéro d'interface sortante).

En réception d'un tel message propagé, un filtre sur l'interface est effectué pour rejeter tous les messages non destinés à une interface entrante de la station.

Dans le cas de la propagation de la PDU RREQ, la fonction de Routage interroge la fonction Gestion de la Disponibilité pour s'assurer que les disponibilités sur les interfaces amonts et avals sont compatibles avec les paramètres FEC ciblés qui apparaissent dans le contenu de la PDU.

Ce principe simple permet de constituer des routes à comportement différencié, chacune étant la route la plus courte dans un sous-graphe donné.

Dans chaque station, une route est identifiée par l'adresse cible qui désigne explicitement le sous-graphe. Une liste de stations Amont utilisant cette route lui est rattaché.

### D - Aiguillage Prochain Bond

Les PDUs à aiguiller par la fonction Traitement de paquet suivent la route AODV qui permet d'atteindre un FEC.

La fonction de Routage fournit donc l'adresse de prochain bond c'est à dire l'adresse IP de l'interface logique permettant ce prochain bond. Cette adresse IP suit les règles d'adressage décrit précédemment et contient donc l'identifiant de l'interface. Une route non utilisée est invalidée après un délai d'inactivité.

Ce mécanisme est implémenté par la fonction Traitement de Paquet et configuré par la fonction de Routage.

### E - Supervision de routes

La fonction Gestion de Disponibilité se charge de vérifier les disponibilités des interfaces virtuelles avales et la connectivité des voisins à travers ces interfaces.

Une route active est supervisée: chaque modification reportée par la fonction Gestion de Disponibilité est analysée à partir de la table des routes actives. Lorsqu'une modification de topologie impacte une route active, la route est invalidée.

Lorsqu'une route est invalidée sur une station intermédiaire, un message RERR est envoyé vers les stations amont utilisant cette route. Ce message est propagé successivement par les stations intermédiaires pour atteindre les stations origine de la route.

Une recherche de route est relancée par les stations Origine. Lorsqu'une station intermédiaire détectant la rupture de route est proche de la station destinataire, une recherche de route est relancée dès cette station intermédiaire.
Encapsulation d'un protocole de réservation

Le protocole LDP est défini par le RFC 3036 de l'IETF. Ce protocole est réutilisé en lui adjoignant les fonctions nouvelles pour la réservation de ressource et pour figer une route conformément à la méthode de routage adoptée.
Une route figée est désignée par l'acronyme anglais LSP (Label Switched Path).

### A - Identification d'un LSP

Un LSP est identifié par la station d'origine. L'identifiant est unique dans le système: une partie est l'identifiant de la station d'origine, l'autre un numéro attribué par la station d'origine. Cet identifiant est véhiculé dans tous les messages de gestion de LSP. Il est fourni à la fonction de Routage et n'est pas modifié dans les cas de reconfiguration de LSP.

### B - Attribution des étiquettes de commutation

Les étiquettes de commutation sont attribuées par chaque station aval. Elles sont prises lors d'un message d'établissement de LSP de l'amont vers l'aval et fournies aux stations amont lors du message de confirmation de l'aval vers l'amont.
Ces étiquettes sont attribuées dans le contexte d'une interface virtuelle.

### C - Réservations bond par bond

Le protocole LDP dans le système Radio ad hoc n'est qu'un moyen d'échanger les messages de gestion de LSP.

Les besoins Radio ad hoc sont donc très simplifiés par rapport à un système MPLS.

Toutes les stations Radio implémentent un protocole LDP simplifié. La topologie est conduite par la fonction Gestion des disponibilités. Les procédures de découverte de LDP sont donc désactivées.

### D - Reconfiguration de LSP

Un LSP pourra être reconfiguré depuis son point d'origine dans des versions produit. Cette reconfiguration pourra s'appuyer sur des principes donnés par le RFC 3214. Elle pourra intervenir lors des ré-agencements pour désengorger le système Radio ad hoc en ramenant les LSP établis sur des routes plus courtes en nombre de bonds.

## Revendications

1. Procédé de routage d'informations dans un réseau comprenant plusieurs noeuds de communication pouvant être mobiles, le routage étant effectué par une route entre un noeud source et un noeud de destination via un ensemble de liens de communication sans fil entre les noeuds du réseau, l'ensemble formant un graphe, procédé **caractérisé en ce qu'**il comporte une étape où une entité de supervision distribuée sur chaque noeud mobile structure le graphe du réseau en liaison bidirectionnelle point à point afin d'obtenir les relations existant avec les noeuds voisins, ainsi qu'en sous-graphes, les arcs d'un sous-graphe partageant sensiblement un même ensemble de propriétés,
• **en ce qu'**il comporte une seconde étape pour chercher et sélectionner une route optimale dans un sous-graphe et **en ce qu'**au cours de la seconde étape une entité d'acheminement distribuée sur chaque noeud mobile route les flux en fonction du sous-graphe sélectionné par le noeud source, et **en ce que**
• le mécanisme de routage est de type « à la demande » et comporte lors de la phase de recherche d'une route, au moins l'étape suivante : les requêtes de route ne sont propagées que sur les liens appartenant au sous-graphe respectant les propriétés demandées par l'application ayant sollicité le procédé de routage, et
• **en ce qu'**il comporte au niveau d'un noeud donné, une étape de comparaison entre les propriétés des ressources de communication existant entre ce noeud et un autre noeud et les propriétés attendues des liaisons du sous-graphe déterminé et **en ce que** l'on crée ou l'on « rompt » les liaisons logiques selon que les propriétés constatées correspondent ou non à celles attendues.

2. Procédé selon la revendication 1, **caractérisé en ce que** l'information transmise dans le réseau est sous forme de paquets et **en ce qu'**il comporte au moins les étapes suivantes :
o insérer une information, telle que les caractéristiques de qualité de service QoS demandée par l'application sollicitant le procédé de routage, au niveau de l'en-tête des paquets par le noeud source du réseau,
o interpréter ou traduire l'information par les noeuds intermédiaires afin de router le paquet d'informations circulant dans le réseau en respectant la contrainte du sous-graphe adapté à la demande de l'application,
o au niveau du noeud de sortie Ns retirer l'information de l'en-tête.

3. Procédé selon la revendication 1, **caractérisé en ce que** lors de la comparaison des valeurs des caractéristiques définissant les propriétés, une marge prédéfinie est appliquée.

4. Procédé selon l'une des revendications 1 à 3, **caractérisé en ce qu'**au niveau d'un noeud, on détecte la congestion et l'on met en oeuvre des priorités d'ordonnancement et de préemption qui définissent en fonction des priorités d'acheminement de données demandées par les applications, les possibilités d'attribution de ressources pour servir un flux individuel au détriment d'un autre ou au détriment d'un sous-graphe en faveur d'un autre.

5. Procédé selon l'une des revendications 1 à 4, **caractérisé en ce qu'**il comporte une étape de réservation de ressources bond par bond dans le réseau afin de figer une route et de la séparer de l'évolution des sous-graphes.

6. Procédé de routage selon l'une des revendications 1 à 5, **caractérisé en ce qu'**il comporte une recherche de route à la demande.

7. Procédé selon la revendication 6, **caractérisé en ce que** le protocole est un protocole AODV.

8. Procédé selon la revendication 7, **caractérisé en ce que** l'on utilise le paramètre « adresse destinataire » des PDU AODV pour véhiculer les caractéristiques de qualité de service QoS.

## Claims

1. Method for routing information in a network comprising several communication nodes that may be mobile, the routing being done by a route between a source node and a destination node via a set of wireless communication pathways between the nodes of the network, the entire set forming a graph, method **characterized in that** it comprises a step in which a supervision entity distributed on each mobile node structures the graph of the network as a point-to-point two-way link in order to obtain the relationships existing with the neighbouring nodes, and also as sub-graphs, the arcs of a sub-graph sharing substantially a same set of properties,
**in that** it comprises a second step for searching for and selecting an optimal route in a sub-graph and **in that** in the course of the second step a forwarding entity distributed on each mobile node routes the streams as a function of the sub-graph selected by the source node, and **in that**
• the routing mechanism is of the "on demand" type and comprises, during the phase of searching for a route, at least the following step: the route requests are propagated only over pathways belonging to the sub-graph complying with the properties demanded by the application that invoked the routing method, and
• **in that** it comprises, at a given node, a step of comparison between the properties of the communication resources existing between this node and another node and the expected properties of the links of the determined sub-graph and **in that** the logic links are created or "broken" depending on whether or not the observed properties correspond to those expected.

2. Method according to Claim 1, **characterized in that** the information transmitted in the network is in the form of packets and **in that** it comprises at least the following steps:
inserting information, such as the quality of service QoS characteristics requested by the application invoking the routing method, into the header of the packets by the source node of the network,
interpreting or translating the information by the intermediate nodes in order to route the information packet flowing in the network in compliance with the constraint of the sub-graph adapted at the demand of the application,
° at the egress node Ns, removing the information from the header.

3. Method according to Claim 1, **characterized in that**, during the comparison of the characteristic values defining the properties, a predefined margin is applied.

4. Method according to one of Claims 1 to 3, **characterized in that**, at a node, congestion is detected and priorities of scheduling and pre-emption are implemented which, depending on the data forwarding priorities demanded by the applications, define the possibilities of assigning resources to serve one individual stream to the detriment of another or to the detriment of one sub-graph in favour of another.

5. Method according to one of Claims 1 to 4, **characterized in that** it comprises a step of hop-by-hop resource reservation in the network in order to make a route static and to separate it from the evolution of the sub-graphs.

6. Method of routing according to one of Claims 1 to 5, **characterized in that** it comprises a route search on demand.

7. Method according to Claim 6, **characterized in that** the protocol is an AODV protocol.

8. Method according to Claim 7, **characterized in that** the "recipient address" parameter of the AODV PDUs is used to convey the quality of service QOS characteristics.

## Patentansprüche

1. Verfahren zum Routen von Informationen in einem Netz, das mehrere Kommunikationsknoten aufweist, die mobil sein können, wobei das Routen über eine Route zwischen einem Quellenknoten und einem Zielknoten über eine Einheit drahtloser Kommunikationsstrecken zwischen den Knoten des Netzes erfolgt, wobei die Einheit einen Netzplan bildet, **dadurch gekennzeichnet, dass** es einen Schritt aufweist, bei dem eine Überwachungsentität, die über jeden mobilen Knoten verteilt ist, den Netzplan des Netzes in Punkt-zu-Punkt-Zweirichtungsverbindung strukturiert, um die Beziehungen, die mit den Nachbarknoten existieren, zu erzielen, sowie in Unternetzpläne, wobei die Bögen eines Unternetzplans im Wesentlichen eine gleiche Einheit von Eigenschaften teilen,
• dass es einen zweiten Schritt aufweist, um in einem Unternetzplan eine optimale Route zu suchen und auszuwählen, und dass im Laufe des zweiten Schritts eine auf jeden mobilen Knoten verteilte Fördereinheit die Ströme in Abhängigkeit von dem von dem Quellenknoten ausgewählten Unternetzplan routet, und dass
• der Routingmechanismus des Typs "auf Abruf" ist und bei der Suchphase einer Route mindestens den folgenden Schritt aufweist: die Routinganfragen werden nur auf den Strecken verbreitet, die zu dem Unternetzplan gehören, der die von der Anwendung, die das Routingverfahren abgerufen hat, geforderten Merkmale einhält,
• dass es auf der Ebene eines gegebenen Knotens einen Schritt des Vergleichens zwischen den Eigenschaften der zwischen diesem Knoten und einem anderen Knoten bestehenden Kommunikationsressourcen und den Eigenschaften aufweist, die von den Verbindungen des bestimmten Unternetzplans erwartet werden, und dass man die logischen Verbindungen je nachdem schafft oder "bricht", ob die festgestellten Eigenschaften den erwarteten entsprechen oder nicht.

2. Verfahren nach Anspruch 1, **dadurch gekennzeichnet, dass** die in dem Netz übertragene Information die Form von Paketen hat, und dass es mindestens die folgenden Schritte aufweist:
• Einfügen einer Information auf der Ebene des Kopfteils der Pakete durch den Quellenknoten des Netzes, wie zum Beispiel die Dienstqualitätsmerkmale QoS, die von der Anwendung, die das Routingverfahren abgerufen hat, verlangt werden,
• Analysieren oder Übersetzen der Information durch die Zwischenknoten, um das Paket Informationen, das in dem Netz zirkuliert, unter Einhalten der Forderung des Unternetzplans, der an die Anfrage der Anwendung angepasst ist, zu routen,
• auf der Ebene des Ausgangsknotens Entfernen der Information aus dem Kopfteil.

3. Verfahren nach Anspruch 1, **dadurch gekennzeichnet, dass** beim Vergleichen der Werte der Merkmale, die die Eigenschaften definieren, eine vordefinierte Marge angewandt wird.

4. Verfahren nach einem der Ansprüche 1 bis 3, **dadurch gekennzeichnet, dass** man auf dem Niveau eines Knotens den Stau erfasst und Arbeitsfolgen- und Vorrechtsprioritäten umsetzt, die in Abhängigkeit von den Datenförderprioritäten, die von den Anwendungen gefordert werden, die Ressourcenzuweisungsmöglichkeiten definieren, um einen Einzelstrom auf Kosten eines anderen oder auf Kosten eines Unternetzplans zugunsten eines anderen zu berücksichtigen.

5. Verfahren nach einem der Ansprüche 1 bis 4, **dadurch gekennzeichnet, dass** es einen Ressourcenreservierungsschritt Übertragungsentfernung für Übertragungsentfernung in dem Netz aufweist, um eine Route einzufrieren und sie von der Entwicklung der Unternetzpläne zu trennen.

6. Routingverfahren nach einem der Ansprüche 1 bis 5, **dadurch gekennzeichnet, dass** es eine Routensuche auf Abruf aufweist.

7. Verfahren nach Anspruch 6, **dadurch gekennzeichnet, dass** das Protokoll ein AODV-Protokoll ist.

8. Verfahren nach Anspruch 7, **dadurch gekennzeichnet, dass** man den Parameter "Empfängeradresse" des PDU AODV verwendet, um die Dienstqualitätsmerkmale QoS zu übertragen.
